# EUROPEAN PATENT SPECIFICATION

(11) **EP 2 153 975 B1**
(45) Date of publication and mention of the grant of the patent: **20.03.2013**
(21) Application number: 07730531.6
(22) Date of filing: 14.05.2007
(51) Int. Cl.: B29C 57/08

(54) **METHOD FOR MANUFACTURE OF RADIALLY PRODUCED PIPING**
VERFAHREN ZUR HERSTELLUNG EINER RADIAL HERGESTELLTEN ROHRLEITUNG
PROCEDE DE FABRICATION DE TUBAGE ORIENTE DE MANIERE RADIALE

(43) Date of publication of application: 17.02.2010
(73) Proprietor: Uralita Sistemas de Tuberias, S.A., 28004 Madrid (ES)
(72) Inventor: GONZALEZ GOMEZ, Constantino, E-28004 Madrid (ES)
(74) Representative: Carvajal y Urquijo, Isabel
(86) International application number: PCT/ES2007/070093
(87) International publication number: WO 2008/139005

(56) References cited:
- EP-A- 0 700 771
- ES-T3- 2 179 345
- FR-A- 2 753 648

## Description

### Object of the invention

The object of the present invention is a procedure for manufacturing a radially oriented pipe, as well as the pipe obtained, which is obtained from a tubular preform treated according to the procedure object of the invention.

The present procedure is characterized by the special setting and design of the means used for radially orienting a preform, among which it is worth noticing the means for discharging the fluids used for preheating the preform, as well as the use of a jacket for cooling the preform once it is radially oriented. Besides, during this process the preform of the half cup is also carried out, which consists of a pre-flaring, presenting this pipe area a greater diameter than the rest of the pipe.

The present invention is also characterized by the use of pressurized water in the preform once it is heated, thus producing a radial deformation of the preform taking the mold form.

Therefore, the present invention refers to the field of plastic pipe manufacturing, and it particularly refers to those radially oriented.

### Background of the invention

Up to the present moment, there are known procedures for radially oriented plastic pipe manufacturing such as the one described in ES 2179345; however, the procedure described in said document presents some difficulties.

On the one hand, after heating the preform with water flowing both internally and externally to the preform, instead of injecting pressurized air through the interior of the preform to radially orient it, pressurized water is used for this process, which is much easier to handle, facilitating the process, without any need of using a fluid different from the one used so far.

On the other hand, instead of cooling the exterior of the pipe once the final form is adopted with only water circulating between the jacket and the mold, in order to perform the cooling stage, as well as water, pressurized forced air is used in the interior of the pipe, so that it maintains its form until it reaches a temperature that allows it to keep the desired form. The cold water circulates through a jacket outside the mold and different from the channels of discharge or drainage for the hot water used for shaping, obtaining an improvement with this variation as regards energy consumption.

Besides, in said process, once it is cut, no top finishing action is taken, thus producing dimensional changes in the pipe obtained, and thus now at least a flaring is carried out at one of the pipe ends so that its structural characteristics are maintained over time.

Finally, it has been observed that the end fixing means of the preform and its subsequent release were designed in such a way that they did not facilitate mould release, that is why it is now intended to improve the part or fixing subset of the preform ends in order to facilitate mould release.

FR 2 753 648 discloses a method for the manufacturing of radially oriented plastic pipes in which a water pressure of 12 bar is applied and which axially pull the tube.

Therefore, the object of the present invention is to carry out a series of changes in the procedure for manufacturing radially oriented pipes, so that the manufacturing process be facilitated, the final properties of the product obtained be improved, maintaining their structural characteristics over time and facilitating the final mould release of the product once manufactured.

### Description of the invention

The object of the present invention basically consists of an improved procedure for the manufacturing of radially oriented plastic pipes, where the pipes obtained are preferably used in the distribution of drinking water without limiting other possible applications.

The object of the invention is defined in claim 1.

Dependent claims define further embodiments.

The preform is fixed onto the mold ends by means of some metal grooved notches or threaded sleeves housed in metal clamps. The threaded sleeve is joined to a sliding part in relation to the metal clamp, thus allowing the mould release of the assembly, for that reason the metal clamp as well as the actuated part presents some recesses and projections, respectively, with a particular form that favors mould release.

The discharge of hot water used before the radial expansion of the preform is made through some micropores connected to drainage or discharge channels arranged externally to the mold. The micropores are arranged forming several aligned rows so that the micropores of a same row are grouped under the same drainage or discharge channel.

The pipe cooling, once radially expanded, is made through an external jacket of the mold, comprising some inlet and outlet connections through which cooling water goes into and out of it. In addition to the use of circulation water for cooling, pressurized air is used in the pipe interior so as to ensure that the desire final shape is kept.

### Description of the drawings

In order to complement the description hereinafter and with the object of helping understand better its characteristics, the present descriptive memory is accompanied by a set of plans wherein figures represent, in an illustrative and non-limiting way, the most significant details of the invention.
Figure 1 shows a simplified representation of the manufacturing procedure, where the working temperature and pressure of each stage, as well as the form that the preform takes in each stage, are shown.
Figure 2 shows a partially sectional view of the mold used in the manufacturing, as well as the means for closing and fastening the preform ends.
Figure 3 shows a detailed view of the preform end fixing subset, where the constructive characteristics presented by the different elements can be observed.

### Preferred embodiment of the invention

Referenced by the figures, there follows a description of a preferred embodiment of the proposed invention.

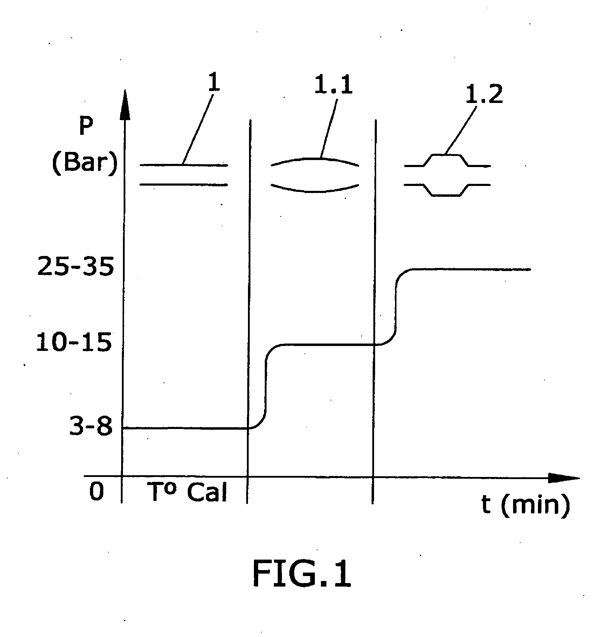

In Figure 1 there can be observed how the preform 1 undergoes a first stage of fixing it to a mold and heating, where it basically maintains its structural form, then with the application of an internal pressure by means of pressurized water the preform (1) takes an expanded form (1.1), taking a tubular section form with convex form generators and a maximum radius corresponding to its central zone. This expansion takes place when a pressure ranging from 10 to 15 bars is reached. Finally, in a following stage when a 25 bar pressure is reached, the adjustment of the preform (1) expanding it towards its final form is started, completing the whole process in a few seconds.

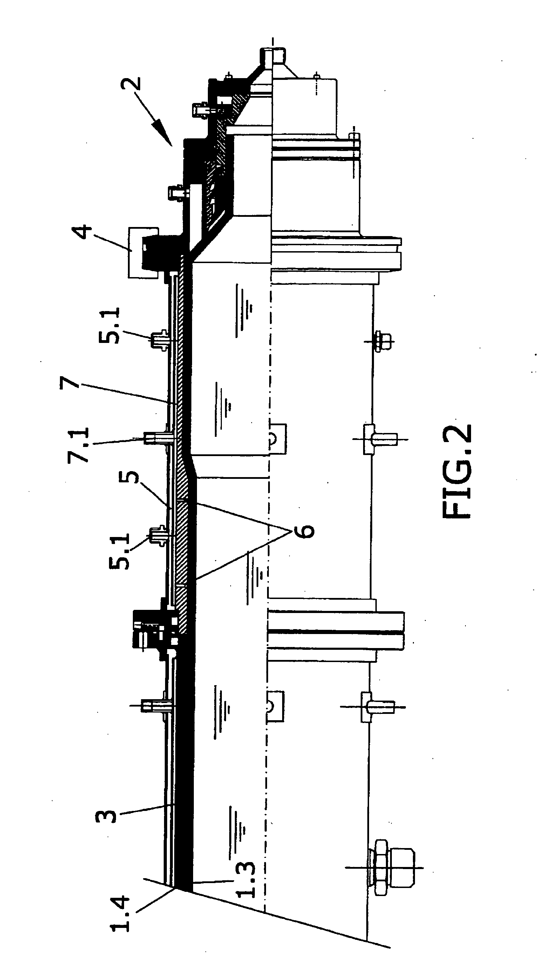

In Figure 2, it can be observed that a fixing subset (2) of the preform ends is associated to one of the ends of the mold (3).

Besides, on the other hand, external to the mold (3) there is a cooling jacket (5) covering the entire mold interior and through which water can circulate. For that purpose the cooling jacket (5) has some inlet and outlet connections (5, 1).

External to the mold (3) and arranged inside the cooling jacket (5) there are some drainage or discharge channels (7), which drain the hot water expelled through the micropores (6) during the radial expansion process. The micropores are arranged forming rows, so that each row of micropores (6) is connected to the interior of a drainage or discharge channel (7), which expels hot water through a connection (7, 1).

The connection between the mold (3) and the preform fixing ends (2) is made by means of closing pliers (4) with an internal truncated cone-shaped cross section.

The micropores (6) allow the water removal once pressurized water is applied into the interior of the preform, to that end said micropores have a diameter of approximately 1 mm and are spaced at 50 mm of one another, forming a cross, thus evenly distributed across the whole surface except for the preform fixing ends.

The cooling water circulates through the interior of the cooling jacket (5) comprised between both ends of the fixing means (2) of the preform (1) at a temperature of approximately 12°C, during a period of approximately 10 minutes with which the pipe external surface (1.4) has the same temperature as the cooling water, while the pipe internal surface temperature (1.3) falls below 70°, which is enough to reach the appropriate rigidity for its subsequent manipulation, without folding, using together with the cooling water circulation, pressurized air through the interior of the expanded form so as to keep its shape and ensure that the pipe does not lose its dimensions until it reaches enough rigidity due to the effect of cooling.

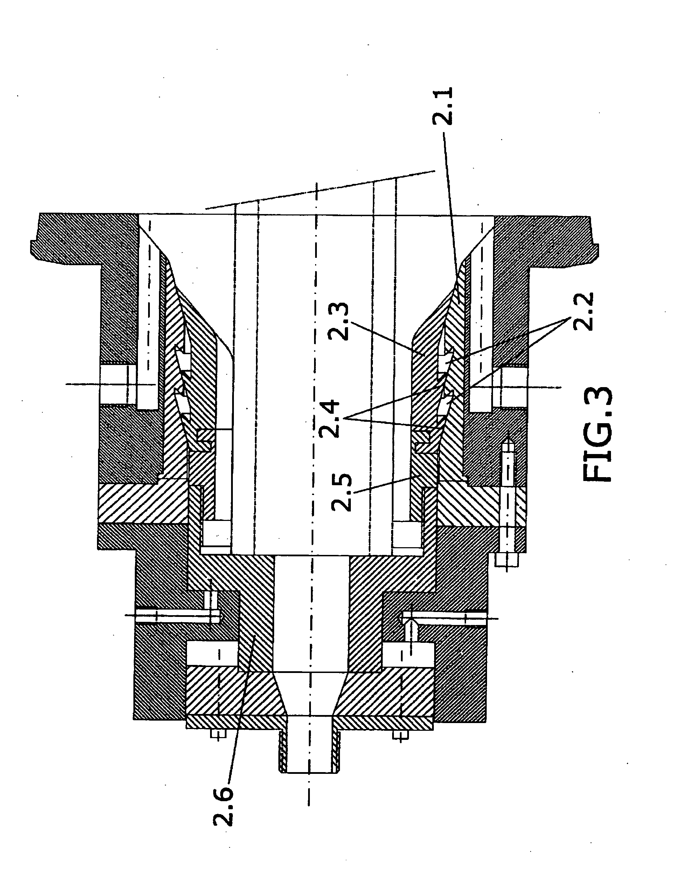

In Figure 3, the constructive details of the fixing means (2) of the preform (1) ends are shown, having to that end a metal clamp (2.1) in the internal face of which there are some curved beveled grooves (2.2), in which some complementary projections, (2.4) located on the part or actuated section (2.3) connected to the fixing threaded sleeve (2.5) of the preform (1) end, fit into. In order to close the whole assembly, a tightening sleeve (2.6) of the closing part of the mold is provided.

It is worth noticing how the projections (2.4) of the actuated section (2.3) present a curved form that fits into the curved beveled grooves (2.2), which facilitates the mould release.

## Claims

1. Procedure for manufacturing radially oriented piping **characterized in that** it consists of the following stages:
- Insertion of the preform (1)
into a mold having a diameter equal to the diameter that the preform (1) will reach after its radial deformation after being heated, two different diameters in existing in the interior of the preform (1), that of the pipe and that of the preflaring, the mold (3) having external jacket through which water may be circulated.
- The preform ends (2) are fixed by means of metal grooved notches in which some clamps are housed.
- Water is circulated through the interior of the mold (3) at a temperature between 90° and 100°C and is circulated from 6 minutes to one hour;
- Water circulation also through the interior of the preform during the same period of time;
- Closing of circulation water through the interior of the preform (1);
- Injection of pressurized water into the interior of the preform (1) at a pressure ranging from 10 to 30 bars, which produces the outflow of the exterior water to the preform (1) through some micropores (6) of the mold (3) towards some channels (7) for the drainage or removal of water expelled through the micropores (6);
- During the injection of pressurized water simultaneous radial expansion of the preform (1) and simultaneous axial orientation of the plastic polymer molecules, the expansion starting when a pressure ranging from 10 to 15 bars is reached.
- When a 25 bar pressure is reached the adjustment of the preform (1) in expansion towards its final form is started, completing the whole process in a few seconds.
- Injection of air into the pipe interior so that it does not lose its dimensions until it achieves enough rigidity due to cooling.
- Exterior cooling of the pipe by means of water circulation through a cooling jacket (5) exterior to the mold (3) during about 10 minutes, that is why the external pipe face reaches the same temperature as the water circulating through the jacket, while the internal pipe face falls below 70°C, which is a temperature that allows its subsequent manipulation, wherein mean while a small amount of water interior to the form is allowed to outflow which is gradually substituted for air to accelerate the subsequent casting process;
- Removal of the water inside the preform (1) by means of pressurized air at 10 bars;
- Depressurization of the pipe;
- Opening of the mold (3);
- Cutting of the pipe ends;
- Flaring of one pipe end;
- Surfacing of the flaring area, that is, a cut is made on the end part which does not present a straight disposition, making a cut at 90° as to the pipe axis;
- Beveling of the other end.

2. Procedure for manufacturing radially oriented piping according to claim 1 **characterized in that** the micropores (6) for water expelling made on the periphery of the mold (3) are evenly aligned, spaced and distributed across all the surface except for the preform fixing ends (2), forming rows and being each row grouped under a drainage or discharge channel.

3. Procedure for manufacturing radially oriented piping according to claim 1 **characterized in that** the pipe cooling is made with water at a temperature of approximately 12°C, during approximately 10 minutes so that the pipe external surface (1.4) has the same temperature as the circulating air, while the pipe internal surface temperature (1.3) falls below 70°, which is enough to reach the appropriate rigidity for its subsequent manipulation, without folding.

4. Procedure for manufacturing radially oriented piping according to claim 1 **characterized in that** the end fixing means (2) of the preform (1) have a metal clamp (2.1) in whose internal face there are some curved beveled grooves (2.2) in which some complementary projections (2.4), located on the part or actuated section (2.3), fit into, having in its interior a fastening or lashing threading of the preform end (1), being connected to the fastening part (2.5).

## Patentansprüche

1. Verfahren zur Herstellung eines radial ausgerichteten Rohres, **dadurch gekennzeichnet, dass** es aus folgenden Schritten besteht:
- Einlegen der Vorform (1)
in eine Form, welche einen Durchmesser hat, der den Durchmesser, den die Vorform (1) nach dessen radialen Verformung nach der Erwärmung erreichen wird, gleicht, wobei zwei verschiedene Durchmesser im Inneren der Vorform (1) vorhanden sind, das des Rohres und das der Voraufweitung, wobei die Form (3) einen Außenmantel hat, durch welchen man Wasser durchströmen lassen kann;
- die Enden (2) der Vorform werden mittels metallischen Schlitznuten, in denen einige Schellen gelagert sind, befestigt;
- Wasser durchströmt bei einer Temperatur zwischen 90° und 100 °C das Innere der Form (3) und durchströmt von 6 Minuten bis zu einer Stunde;
- Wasserdurchströmung ebenso durch das Innere der Vorform während derselben Zeitspanne;
- Absperren der Wasserdurchströmung durch das Innere der Vorform (1);
- Einspritzung von Druckwasser ins Innere der Vorform (1) bei einem Druck im Bereich von 1,0 bis 3,0 MPa (10 bis 30 bar), wodurch das Abfließen des Wassers außerhalb der Vorform (1) durch einige Mikroporen (6) der Form (3) zu einigen Kanälen (7) zur Entwässerung oder Entfernung des durch die Mikroporen (6) ausgestoßenen Wassers erfolgt;
- während der Einspritzung von Druckwasser, gleichzeitige radiale Ausdehnung der Vorform (1) und gleichzeitige axiale Ausrichtung der Kunststoffpolymermoleküle, wobei die Ausdehnung beginnt, sobald ein Druck im Bereich von 1,0 bis 1,5 MPa (10 bis 15 bar) erreicht wird;
- sobald ein Druck von 2,5 MPa (25 bar) erreicht wird, beginnt die Anpassung der sich ausdehnenden Vorform (1) an ihre endgültige Form, wobei der gesamte Vorgang innerhalb wenigen Sekunden abgeschlossen wird;
- Einblasen von Luft ins Innere des Rohres, so dass dieses nicht seine Ausmaße verliert, bis es genügende Steifigkeit durch Abkühlung erhält;
- Außenkühlung des Rohres mittels Wasserdurchströmung durch einen Kühlungsmantel (5) außerhalb der Form (3) während ungefähr 10 Minuten, wodurch die Außenseite des Rohres die gleiche Temperatur wie das Wasser, welches den Mantel durchströmt, erreicht, während die Innenseite des Rohres bis auf unter 70 °C fällt, welche eine Temperatur ist, die dessen spätere Handhabung erlaubt, wobei es inzwischen einer kleinen Wassermenge im Inneren der Form das Abfließen ermöglicht wird, welche allmählich zur Beschleunigung des anschließenden Gießverfahrens durch Luft ersetzt wird;
- Entfernung des Wassers innerhalb der Vorform (1) mittels Druckluft bei 1,0 MPa (10 bar);
- Druckentlastung des Rohres;
- Öffnung der Form (3);
- Schneiden der Rohrenden;
- Aufweitung eines Rohrendes;
- Drehen der Aufweitungszone, d. h., es erfolgt ein Schnitt an dem Endteil, welches keine gerade Anordnung aufweist, wobei ein Schnitt mit 90° zur Rohrachse erfolgt;
- Abschrägen des anderen Endes.

2. Verfahren zur Herstellung eines radial ausgerichteten Rohres nach Anspruch 1, **dadurch gekennzeichnet, dass** die Mikroporen (6) für die Wasserausstoßung, in dem Umfang der Form (3) eingearbeitet, gleichmäßig über die gesamte Oberfläche mit Ausnahme der die Vorform befestigenden Enden (2) ausgerichtet, beabstandet und verteilt sind, wobei dieselbe Reihen bilden und jede Reihe unter einem Entwässerungs- oder Auslaufkanal zusammengefasst ist.

3. Verfahren zur Herstellung eines radial ausgerichteten Rohres nach Anspruch 1, **dadurch gekennzeichnet, dass** die Rohrkühlung während ungefähr 10 Minuten mit Wasser bei einer Temperatur von ungefähr 12 °C erfolgt, so dass die Außenoberfläche (1.4) des Rohres dieselbe Temperatur wie die durchströmende Luft hat, während die Temperatur der Innenoberfläche (1.3) des Rohres bis auf unter 70° fällt, welche ausreicht, um die günstige Steifigkeit für dessen anschließende Handhabung zu erreichen, ohne Faltung.

4. Verfahren zur Herstellung eines radial ausgerichteten Rohres nach Anspruch 1, **dadurch gekennzeichnet, dass** die Mittel (2) zur Befestigung der Enden der Vorform (1) eine Metallschelle (2.1) haben, in dessen Innenseite sich einige gekrümmte, abgeschrägte Nuten (2.2) befinden, in denen einige korrespondierende Vorsprünge (2.4), auf dem angetriebenen Teil oder Abschnitt (2.3) liegend, einpassen, in dessen Inneren ein Befestigungs- oder Festlegungsgewinde des Endes der Vorform (1) aufweisend, wobei der angetriebene Abschnitt (2.3) mit dem Befestigungsteil (2.5) verbunden ist.

## Revendications

1. Procédé pour la fabrication de tuyauterie radialement orientée **caractérisé en ce qu'**il consiste en les étages suivantes :
- insertion de la préforme (1) dans un moule ayant un diamètre égal au diamètre que la préforme (1) atteindra lors de sa déformation radiale après avoir été chauffée, en existant deux diamètres différents à l'intérieur de la préforme (1), celui du tuyau et celui de pré-évasement, le moule (3) ayant une enveloppe externe dans laquelle on peut faire circuler de l'eau ;
- les extrémités (2) de la préforme sont fixées par l'intermédiaire d'encoches ciselées dans le métal dans lesquelles son logés quelques colliers de serrage ;
- on fait circuler de l'eau à l'intérieur du moule (3) à une température comprise entre 90 ° et 100 °C et on l'a fait circuler de 6 minutes à une heure ;
- l'eau circule aussi à l'intérieur de la préforme pendant la même période de temps ;
- fermeture de l'eau circulant à l'intérieur de la préforme (1) ;
- injection d'eau pressurisée à l'intérieur de la préforme (1) à une pression variant de 1 à 3 MPa, ce qui produit l'écoulement de l'eau extérieure à la préforme (1) à travers de quelques micropores (6) du moule (3) vers quelques canaux (7) pour le drainage ou enlèvement de l'eau expulsée à travers des micropores (6) ;
- pendant l'injection d'eau pressurisée expansion radiale simultanée de la préforme (1) et orientation axiale simultanée des molécules en plastique polymérique, l'expansion commençant des qu'une pression variant de 1 à 1,5 MPa est atteinte ;
- quand on atteint une pression de 2,5 MPa l'ajustement de la préforme (1) en expansion vers sa forme finale commence, le procès entier se complétant en quelques secondes ;
- injection d'air dans le tuyau intérieur pour qu'il ne perde pas ses dimensions jusqu'il atteigne assez de rigidité dû au refroidissement ;
- refroidissement extérieur du tuyau en faisant circuler de l'eau dans l'enveloppe de refroidissement (5) extérieure au moule (3) pendant approximativement 10 minutes, raison par laquelle la face externe du tuyau atteint la même température que l'eau circulant dans l'enveloppe, pendant que la face interne du tuyau descend en dessous 70 °C, température qui permet sa manipulation subséquente. En même temps, on permet qu'une petite quantité d'eau intérieure à la forme puisse s'écouler, laquelle est graduellement remplacée par de l'air pour accélérer le procédé subséquent de moulage ;
- enlèvement de l'eau de l'intérieur de la préforme (1) par air pressurisé à 1 MPa;
- dépressurisation du tuyau ;
- aperture du moule (3) ;
- découpe des extrémités du tuyau ;
- évasement d'une des extrémités du tuyau ;
- surfaçage de la section évasée, c'est à dire, on procède à découper la portion terminale qui ne présente pas une disposition droite, en découpant à 90 ° par rapport à l' axe ;
- biseautage de l'autre extrémité.

2. Procédé pour la fabrication de tuyauterie radialement orientée selon la revendication 1 **caractérisé en ce que** les micropores (6) pour l'expulsion de l'eau pratiqués sur la périphérie du moule (3), sont alignés, séparés et distribués uniformément au long de toute la surface à exception des extrémités (2) de fixation de la préforme, formant des rangées et étant chaque rangée groupée sous un drainage o canal de décharge.

3. Procédé pour la fabrication de tuyauterie radialement orientée selon la revendication 1 **caractérisé en ce que** le refroidissement du tuyau est fait avec de l'eau à une température d'approximativement 12 °C, pendant approximativement 10 minutes, ainsi la surface externe (1.4) du tuyau a la même température que l'air de circulation, pendant que la température de la surface interne (1.3) du tuyau descend en dessous 70 °, suffisante pour atteindre la rigidité appropriée pour sa manipulation subséquente, sans des pliages.

4. Procédé pour la fabrication de tuyauterie radialement orientée selon la revendication 1 **caractérisé en ce que** les moyens de fixation (2) des extrémités de la préforme (1) sont munis d'un collier de serrage (2.1) métallique dont la face interne présente quelques encoches (2.2) courbées et biseautées, dans lesquelles s'engagent quelques projections (2.4) complémentaires, situées sur la pièce ou section actionnée (2.3), ayant à son intérieur un filetage d'attache ou ancrage de l'extrémité de la préforme (1), la pièce actionnée (2.3) étant connecté a la pièce d'attache (2.5).
